(19)

**Europäisches Patentamt**

**European Patent Office**

**Office européen des brevets**

(11) **EP 4 080 458 A1**

(12) **EUROPEAN PATENT APPLICATION**

(43) Date of publication:
**26.10.2022   Bulletin 2022/43**

(21) Application number: **21169171.2**

(22) Date of filing: **19.04.2021**

(51) International Patent Classification (IPC):
**G06T 11/00** (2006.01)

(52) Cooperative Patent Classification (CPC):
**G06T 11/00;** G06T 2207/10004; G06T 2207/20081;
G06T 2207/20084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mindtech Global Limited
Brighton BN1 1HG (GB)**

(72) Inventors:
• **MALEK, Ali
Brighton, BN1 1HG (GB)**

• **MCGUINNESS, Peter
La Jolla, CA 92037 (US)**

(74) Representative: **Fresh IP
WeWork.
50-60 Station Road
Cambridge CB1 2JH (GB)**

Remarks:
Amended claims in accordance with Rule 137(2) EPC.

(54) **APPARATUS AND METHOD OF VARIABLE IMAGE PROCESSING**

(57)     A process and apparatus for applying style images ISj to at least one content image IC containing entity classes i (i: 1, 2, ... M), wherein attributes of a plurality j of one style images (ISj: IS1, IS2, ......ISN), each containing entity classes i (i: 1, 2, ...M), are transferred to the content image IC, the process comprising down-sampling the at least one content image ICi, to derive a content feature vector FCi , down-sampling the j style images ISj, to derive j style feature vectors (FSij: FSi1, FSi2, ..., FSiN), stylising the content feature vector FCi by transferring attributes of the style feature vectors (FSij : FSi1, FSi2, ..., FSiN) to the content feature vector FCi , to derive j stylised content feature vectors (FCSij: FCSi1, FCSi2, ..., FCSiN), combining a blending factor ($\alpha$ij: $\alpha$i1, $\alpha$i2, ..., $\alpha$iN) of each of the respective stylised content feature vectors (FCSij: FCSi1, FCSi2, ..., FCSiN) to derive a blended feature vector Fi* and up-sampling the blended feature vector Fi* to generate a blended stylised content image ICSij

Fig 3

## Description

TECHNICAL FIELD

The present disclosure relates to the generation, creation, amendment and processing of electronic images based on one or more datasets defining virtual entities such as objects, persons, settings and environments.

In particular, this disclosure relates to the multiple dimensional generation and provision of realistic and photorealistic images of a virtual world represented by synthetic datasets. Synthetic images may be modified by reference to at least one other image defining a "style" and adopting specified attributes of the style in a practice referred to as style transfer or stylisation. The use of highly realistic imaging facilitates an enhanced user experience of the virtual environments depicted. Real time provision of such images allows the user to interact with the virtual objects and surroundings, thereby providing an immersive and dynamic experience resembling a video.

The images referred to in this disclosure may be deployed in numerous applications, including gaming, entertainment, design, architecture, aviation, planning, training, education, medicine, security, defence, etc.

BACKGROUND OF THE INVENTION

In order to enhance the realism in the images, the data relating to the virtual objects, places and environments, as provided by data ("content datasets"), which may be synthetic datasets, may be modified by the use of styles datasets or style overlays. Without such modification, the images provided by content data alone may be considered "raw" in the sense that objects or environments in the images may lack sufficient or appropriate texture, colouring, shading, or indeed precise shape or form, causing the images rendered to be "flat", simplistic and unconvincing to the user, and the user experience is inevitably very limited.

By modifying the content data with style data, the realism in the final images can be greatly improved and the user experience considerably enhanced. A generalised street scene depicting the basic simple geometries of objects and surroundings in a street, if so modified, can be transformed by the style data into a photorealistic street scene, complete with buildings, cars, street furniture and pedestrians, each of which is rendered in realistic textures, colours, shades and hues. Moreover, different styles applied to the same content data will cause different environments to be portrayed in the modified street scene eg one could apply an Indian style image or a German style image to the same content data depicting a generalised street scene, and the stylised content data would render an image of a street in India or a street in Germany.

The application of the style data to content data, or "style transfer" or "stylisation", is based on conventional processes which typically (but not exclusively) use neural network architecture, comprising an "autoencoder", working on an annotated content image and an annotated style image, ie the pixels within each image being annotated, or labelled, inter alia by what they display. In the street scene example, a pixel may be labelled as a pixel for a car or a pixel for a pedestrian etc. The autoencoder has two major parts: an "encoder", which down-samples a given output in both the content image and style image to produce a compact "feature vector" for each, and a "decoder" which up-samples the compact feature vector of the original input images. The compact feature vector contains "compacted" data from the source image and thereby "preserves", subject to some loss, the bulk of the original pixel data from the source.

The reader is referred to a background publication which sets out a summary of a conventional style transfer: "A Closed-form Solution to Photorealistic Image Stylization" by Yijun Li and others, University of California, 27 July 2018.

Once the two compact feature vectors, the content feature vector and the image feature vector, are generated, their individual attributes, as explained below, are analysed: one or more transformations are performed on the content feature vector using the style feature vector, resulting in the "transfer" of the statistical properties of the style vector to the content feature vector. This transfer is the "style transfer" between the two vectors: the modification of the content feature vector's components by replacement with those of the style feature vector. The content feature vector, thus modified, is a stylised content feature vector. The down-sampling is then typically reversed, in the sense that the stylised content feature undergoes up-sampling, to generate a new image, which is the stylised content image.

In conventional arrangements the one or more transformations referenced above typically comprise a "whitening" transformation, which serves to remove all the colour-related information in the content image, and a "colouring" transformation which serves to transform the previously whitened content image by giving it some of the attributes of the style image. It is the latter transformation, colouring, which effectively "transfers" the attributes from style image's vector to the content image's vector and is referred to as style transfer or stylisation. As a result of these transformations the features vectors undergo "domain matching" : regions in the content image are paired with regions with the same annotation (or label) as the style image, and then each regional content-style pair is analysed for areal similarity ie having comparable areas, or, in practice having a comparable number of pixels. If a regional pair meets the areal similarity condition, then the processor transfers the style of that region in the style image to the corresponding region in the content image. However, in conventional systems the similarity test has a binary outcome in each region: either the style is transferred in that region or no transfer occurs and region in the content image is unchanged.

The down-sampling and up-sampling is, however, imperfect and produces errors ("artefacts") at each passage through the autoencoder. The error generation is exacerbated by the vector transformations described above (whitening and colouring transformations), each of which is also imperfect, introducing further artefacts at each occurrence of the transformation.

There are further problems associated with the domain matching, as described above, for conventional systems. Firstly, it relies on extensive annotation in the style image, ie that all pixels are labelled, and, secondly, that corresponding regions, if they can be set up, based on the annotations, are of comparable area and pass the similarity test. If labels are missing, or if the regional pair fails the areal similarity test, the style transfer will not occur for that region. For these reasons, style transfer may occur only in limited parts of the content image, leading to non-uniform occurrence of style transfer across the content image, in effect a partial style transfer, which is clear unsatisfactory.

Moreover, domain matching may be more successful for one entity class, as described below, than for another, ie the performance or efficiency of the domain matching, and the resulting style transfer, may vary among the different entity classes (different labels or annotations). In other words, some regional style-content pairs produce a "successful" style transfer with few artefacts, while for other regional style-content pairs the resulting style-transfer is less successful due to a relatively high number of artefacts. The central aim of a style transfer, ie increasing the realism of a content image, is compromised by the presence in the stylised image of excessive artefacts, which clearly reduce the realism.

There is therefore a need to improve the style transfer and reduce the artefacts arising in the sampling and transformation processes described above. In particular, in order to optimise the style transfer there is a need to vary the degree to which the style transfer occurs, by providing user-determined parameters which reduce or enhance different components of the style transfer

TECHNICAL OBJECTIVE

The reader will appreciate that there is a need for a method and corresponding arrangement which overcomes the shortcomings described above. Various aspects of the apparatus and method in this disclosure address these drawbacks, providing enhanced performance benefits, are discussed herein.

As will be apparent from this disclosure (see below), it is an objective of the current invention to provide a method and arrangement to enhance style transfer techniques and thereby produce content images with improved realism.

In the face of such shortcomings of conventional systems, which apply a single indiscriminate style transfer to pixels in a content dataset, resulting in a proliferation of unwanted artefacts, there is a need to devise a more discriminating and more flexible approach, in order to reduce the number of artefacts arising in the domain matching. It is an objective of the current invention to provide a method and arrangement of domain matching which facilitates an increased proportion of content-style regional pairs passing the similarity test. Another aim of the method and process as disclosed herein is to provide a style transfer which allows a plurality of style images, rather than a single style image, to contribute in a predetermined combination to the effective overall style transfer. A further objective of the method and arrangement of this disclosure is to optimise the number of content-style regions resulting from domain matching between content data and style data, as well as an improved style transfer to the content image.

Further objectives and advantages of the invention will be apparent on consideration of the operation and workings of the apparatus and method disclosed herein.

BRIEF DESCRIPTION OF THE INVENTION

This disclosure relates to a novel and inventive apparatus and method for enhancing domain matching techniques for style transfer and reducing the number of artefacts in stylised images. Further details of style transfer are set out in a later passage.

In accordance with an embodiment of the invention a method and arrangement of multi style domain matching is herein disclosed, wherein multiple style images are provided for a given content image.

In accordance with an embodiment of the invention a method and arrangement of style transfer is disclosed wherein an interaction between the content image and one or more style images in a multiplicity of style images is provided, and wherein the "overall" style transfer (the total attributes adopted by the content image) is a combination of style transfers related to each pair comprising a content image and each of the style images. The resulting stylised content image is an aggregation, in an operator-determined combination, of the individual style transfers: the aggregate style transfer is a combination of a plurality of individual style transfers.

In accordance with an aspect of the invention a method and arrangement disclosed herein, whereby, for every semantically labelled region on the content image, there are multiple style images in the style dataset.

In an embodiment of the method and arrangement, varying permutations and combinations of predetermined proportions of different stylised content images are obtained, the proportions of the different stylised content images being aggregated in a predetermined way to obtain a composite (blended) stylised content image. Each constituent stylised content image is itself dependent on the i-class concerned and the associated multiple candidate style images, and the aggregation applied may increase or decrease either or both of these in order to optimise the resulting composite (blended) stylised content image. In an embodiment of the invention, the proportions of the different stylised content images may be tuned according to user requirements.

BRIEF DESCRIPTION OF THE FIGURES

Numerous aspects, implementations, objects and advantages of the present invention will be apparent upon consideration of the detailed description herein, taken in conjunction with the drawings, in which like reference characters refer to like parts throughout.

FIG. 1 illustrates an exemplary aspect of the arrangement according to the invention;

FIG. 2 illustrates a style transfer according to a conventional system;

FIG. 3 shows an exemplary aspect of the method and arrangement according to the invention;

FIG. 4 illustrates an exemplary aspect of the method and arrangement according to the invention and its results on overall style transfer;

FIG. 5 illustrates the variation of a general image quality parameter against a blending factor $\alpha$ in accordance with various exemplary aspects and implementations disclosed herein;

DETAILED DESCRIPTION OF THE FIGURES AND EMBODIMENTS

Reference will be made in detail to examples and embodiments of the invention, one or more of which are illustrated in the drawings, the examples and embodiments being provided by way of explanation of the invention, not limitation of the invention. It will be apparent that various modifications and variations can be made in the present invention without departing from the scope of the invention as defined in the claims. Clearly, features illustrated or described as part of one embodiment can be used with another embodiment to yield a still further embodiment. It is intended that the present invention covers such modifications and variations as come within the scope of the appended claims and their equivalents.

Various embodiments, aspects and implementations of the present invention, as well as technical objectives and advantages will be apparent to those skilled in the art, upon consideration of the description herein, in combination with the drawings. Unless indicated otherwise by the context, the terms "first", "second", "third", "last", etc are used herein merely to distinguish one component from another, and are not intended to define or limit the position, location, alignment or importance of the components specified. The singular forms "a", "an", and "the" include plural references, unless, based on the context, this is clearly not the case.

An exemplary aspect of the present disclosure is directed to a process for applying style images $I_{Sij}$ to at least one content image $I_{Ci}$ containing entity classes i (i: 1, 2, ...M), wherein attributes of a plurality $j$ of style images ($I_{Sij}$: $I_{Si1}$, $I_{Si2}$, .....$I_{SiN}$), each containing entity classes i (i: 1, 2, ...M), are transferred to the content image $I_{Ci}$, the process comprising the steps, for each entity classes i (i: 1, 2, ...M), of: down-sampling the at least one content image $I_{Ci}$, to derive a content feature vector $F_{Ci}$; down-sampling the $j$ style images $I_{Sij}$, to derive $j$ style feature vectors ($F_{Sij}$: $F_{Si1}$, $F_{Si2}$, ..., $F_{SiN}$); stylising the content feature vector $F_{Ci}$ by transferring attributes of the style feature vectors ($F_{Sij}$: $F_{Si1}$, $F_{Si2}$, ..., $F_{SiN}$) to the content feature vector $F_{Ci}$, to derive $j$ stylised content feature vectors ($F_{CSij}$: $F_{CSi1}$, $F_{CSi2}$, ..., $F_{CSiN}$); inputting a plurality of variable blending factors ($\alpha_{ij}$: $\alpha_{i0}$, $\alpha_{i1}$, $\alpha_{i2}$, ..., $\alpha_{iN}$); combining a factor $\alpha_{i0}$ of the content feature vector $F_{Ci}$ with a factor ($\alpha_{ij}$: $\alpha_{i1}$, $\alpha_{i2}$, ..., $\alpha_{iN}$) of each of the respective stylised content feature vectors ($F_{CSij}$: $F_{CSi1}$, $F_{CSi2}$, ..., $F_{CSiN}$) to derive a blended feature vector $F_i^*$; up-sampling the blended feature vector $F_i^*$ to generate a blended stylised content image $I_{CSi}$

In an aspect of the present invention the stylising step comprises transforming the content feature vector $F_{Ci}$, wherein the content feature vector $F_{Ci}$ acquires a subset of the attributes of the style feature vector ($F_{Sij}$: $F_{Si1}$, $F_{Si2}$, ..., $F_{SiN}$)

In another aspect of the present invention the combining step comprises generating a weighted average of the content feature vector $F_{Ci}$ and stylised content feature vectors $F_{CSij}$ using blending factors ($\alpha_{ij}$: $\alpha_{i0}$, $\alpha_{i1}$, $\alpha_{i2}$, ..., $\alpha_{iN}$) as the weighting factors.

In a further aspect of the present invention the combining step comprises combining a blending factor $\alpha_{i0}$ of the content feature vector $F_{Ci}$ with the sum of the blending factors $\alpha_{ij}$ of the stylised content feature vector $F_{CSij}$, according to the relation

$$F_i^* = \alpha_{i0} F_{Ci} + \sum_{j=1}^{N} \alpha_{ij} F_{CSij}$$

In accordance with a further exemplary aspect of the current disclosure the stylising step comprises at least the transformation of colouring

In another aspect of the invention the attributes of the style feature vectors ($F_{Sij}$: $F_{Si1}$, $F_{Si2}$, ..., $F_{SiN}$) are the statistical properties of the style feature vectors ($F_{Sij}$: $F_{Si1}$, $F_{Si2}$, ..., $F_{SiN}$)

In accordance with an exemplary aspect of the invention the attributes of the style feature vectors ($F_{Sij}$: $F_{Si1}$, $F_{Si2}$, ..., $F_{SiN}$) are the mean and covariance of the style feature vectors ($F_{Sij}$: $F_{Si1}$, $F_{Si2}$, ..., $F_{SiN}$)

A further aspect of the invention comprises a computation step, comprising computing a quality parameter Q of the blended content image $I_{CSi}$ for a range of values of the blending factor ($\alpha_{ij}$: $\alpha_{i0}$, $\alpha_{i1}$, $\alpha_{i2}$, ..., $\alpha_{iN}$).

A further exemplary aspect of the invention is directed to a process comprising an optimisation step, comprising selecting the value of the blending factor ($\alpha_{ij}$: $\alpha_{i0}$, $\alpha_{i1}$, $\alpha_{i2}$, ..., $\alpha_{iN}$) which corresponds to the highest value of the quality parameter Q.

In accordance with an aspect of the invention the quality parameter Q is the inverse of the Fréchet Inception Distance (FID).

According to another aspect of the invention the quality parameter Q is the parameter Intersection over Union (IOU).

In accordance with another aspect of the invention the sum of the blending factors ($\alpha_{ij}$: $\alpha_{i0}$, $\alpha_{i1}$, $\alpha_{i2}$, ..., $\alpha_{iN}$) is equal to one.

In a further exemplary aspect of the invention the parameter $j$=1, and the step of inputting a plurality of blending factors ($\alpha_{ij}$: $\alpha_{i0}$, $\alpha_{i1}$, $\alpha_{i2}$, ..., $\alpha_{iN}$) comprises inputting a single blending factor $\alpha_{i1}$ and the combining step comprises combining a proportion $\alpha_{i0}$ = (1- $\alpha_{i1}$) of the content feature vector $F_{Ci}$ with a proportion of the stylised content feature vector $F_{CSi1}$ according to the relation

$$F_i^* = (1- \alpha_{i1}) F_{Ci} + \alpha_{i1}F_{CSi1}$$

In an aspect of the invention the process disclosed herein is implemented by a computer

An aspect of the invention is directed to a computing system comprising input device, memory, graphic processing unit (GPU), and an output device, configured to execute the steps of the process of the current disclosure.

Another aspect of the current invention is directed to a computer program product comprising program code instructions stored on a computer readable medium to execute the steps of the process disclosed herein when said process is executed on a computing system.

A further aspect of the current invention is directed to a computer-readable storage medium comprising instructions, which, when executed by a computer, causes the computer to implement the steps of the process disclosed herein.

A brief explanation of "style transfer", as applied in an embodiment of the method and apparatus as disclosed herein, is provided herewith, in reference to a transformation operation performed on the attributes of a content image dataset, in order to enhance the look and feel, and especially the realism, in the latter. As indicated in an opening passage of this disclosure, "style transfer" or "stylisation" refers to the practice in which certain attributes or characteristics of a style image dataset are, by means of such a transform, in effect "transferred" or "applied" to (or assumed or adopted by) the content image dataset. Once the style transfer has taken place, the content image is said to be stylised and is a stylised content image. The terms "style transfer" and "stylisation" are used interchangeably herein and refers to any such transformation of a content image dataset, including any transfer, assumption, adoption or application (also used interchangeably herein) of some of the attributes or characteristics of a style image dataset by a content image data.

As mentioned above, autoencoders are often used to perform a style transfer. An autoencoder, comprising an encoder and decoder for down- and up-sampling respectively, as explained previously, analyses annotations in the respective datasets and determines modifications to be performed on the pixels of the content dataset which would render these enhancements on the content image. In conventional systems, this determination is derived from a comparison of the content image with a single style image, without reference to any further style images, as described above. In such systems this comparison considers the areal similarity of the content image and the single style image, ie by counting the number of pixels in each. If the similarity is sufficiently high the content image is stylised using the style image data, if not there is no stylisation, ie a binary outcome.

A style transfer, in both conventional systems and in accordance with an embodiment of the apparatus and method of this disclosure, consists of known techniques whereby pixels of the content image are modified by transforming ("replacing" or "transferring" or "assuming" or "adopting" or "applying", as described above) certain attributes or characteristics of those content pixels to the attributes of corresponding pixels of the style image. In this sense, reference is made herein to "applying" a style of a style image to a content image, ie a "style transfer" or "stylisation" of the content image or a region thereof. References to "attributes" herein are to the statistical properties of the pixels in the dataset concerned: these relate to any parameters associated with the pixels, such as the RGB values of the pixels or intensity values of the pixels, the statistical properties being, for example, the mean and covariance of the RGB values or other relevant parameters for the pixels concerned.

As stated above, conventional approaches to domain matching for style transfer include comparison of a content image to a single style image to determine similarity between these two. The comparison has to be performed on class-by-class basis and therefore, as stated previously, relies on proper annotation for the pixels. The term entity classes, hereinafter "classes", refers to particular genres of entities depicted in the content and style image, such as persons, cars, buildings, vegetation, street furniture, office furniture. The reader will understand that similarity matching can clearly only be useful when it is performed on the basis of a single class at a time - there is no point testing the similarity of a person's image against that of a tree or attempting matching images of cars and bus stops. Thus, domain matching considers matching of pixels of a first class, then matching of pixels of a second class, etc, until all the classes have been considered.

In known systems the determination of similarity is a straightforward process in which the annotations and attributes of pixels in corresponding regions of the two images are compared, and, where similarity is deemed to be sufficient, eg because the proportion of the pixels analysed which have the same annotations and similarity exceeds a predetermined threshold, then the style is transferred to the content image thereby generating a new stylised content image.

If there is sufficient matching, then the stylisation occurs, otherwise there is no style transfer. As stated above, the binary nature of this process is not satisfactory and to occur it depends on a random style image which may have sufficient similarity to the content image. Also, if the two images are of a such different sizes, such that the number of pixels in the two images is quite disparate, the chances that there is sufficient similarity between them is low: such approaches work best when the content image and style image are approximately the same size, which is clearly quite limiting.

The disadvantages of this approach are exacerbated when numerous entity classes are considered: when looking at the individual classes, there may be an absence or lack of pixels of a particular class, or there may be more size mismatches in one or more style images, and such difficulties accumulate as further classes are added.

In accordance with an aspect of the disclosure herein, an alternative approach to the conventional one described above is one in which the reference of a content image is not to a single style image, but to a plurality of j candidate style images (where j varies from 1 to $N_i$), this plurality occurring for each class ie for each *i*-value (where i = 1 to M). In this aspect a subset of the attributes to be "transferred" (or "adopted", "acquired" etc) to the content image are determined for each of the j candidate style images, such that the style transfer is determined for each of the j style images. A different style transfer will arise for each comparison, ie for each pair of content image and style image. As there are j style images, one can regard this determination as resulting in j individual style transfers.

This approach is applied on a class-by-class basis, with a plurality of candidate images for each class *i*, with the different individual style transfers being each content-style pair (each *i-j* pair). The individual style transfers are aggregated across the different pairs, such that the overall or final style transfer is the cumulative (or composite) of the individual style transfers arising for each pair. The reader will understand that the final stylised content image is the result of applying cumulatively the different style transfers arising at each class *i*: each i-j pair contributes its "component" to the overall (aggregated) style transfer. In other words, the final overall style transfer is the sum of a number of constituent components or individual style transfer contributions occurring at each *i*-class and the corresponding j-values.

Note that, for each *i*-class, the total number $N_i$ of style images, the identity of each style image themselves, and the resulting style transfer, may all differ considerably. The constituent components of the aggregate style transfer (arising from different i and j values) are therefore likely to be unequal: the style transfer arising at each *i*-class and the associated artefacts, ie the "performance" of a style transfer for a particular *i*-value, as well as its contribution to the aggregated/composite style transfer (and its contribution to the realism of the final aggregated stylised content image), are very different.

In order to exploit the varying nature of the individual components and their non-uniform contributions to the aggregated style transfer, the different components can be treated differently in the described aggregation. By allowing more of some components and less of some other components, the respective contribution from a particular i-value or j-value can be increased or decreased. Scaling up or scaling down the individual components in a selective manner causes a change in their individual contributions and therefore also in the aggregated style transfer. By passing relatively high amounts of some components and, in effect, suppressing the contributions of some other components, the quality of the finalised content image can modified: if high performing components are passed or accentuated, while low performing components are relatively attenuated or suppressed, the quality or realism of the final stylised image can be greatly enhanced. The reader will understand that certain combinations of the different components will provide high quality realistic stylised content images: certain "blends" of the different components will result in significantly better stylisations than other blends of the same components.

In accordance with an aspect of the process and arrangement disclosed herein wherein the different constituent components of the aggregate style transfer may be combined non-uniformly, or blended, in order to obtain an improved aggregate style transfer and the optimal stylised content image.

The style transfer, as mentioned previously, may be regarded as the transforming of certain attributes of the content image by replacing these with certain attributes from the style image. This conventionally occurs *between* the down-sampling and up-sampling of the images concerned, ie the style transfer occurs at the level of feature vectors, as described above, with the relevant transformation applied to the content feature vector using the relevant attributes from the style feature vector, and the now stylised content feature vector is then up-sampled to generate a stylised content image. The individual stylisations, arising from each of the *j* style images (ie each is applied to the content feature vector) for a given *i*-value, actually occur in vector space. The combination of the style transfers, to obtain the overall/aggregated style transfer also occurs in vector space, before a final aggregated stylised content image is obtained, by up-sampling, from the stylised content feature vector. Any combining or aggregating of the style transfer components, as discussed in the previous passage, also occurs in vector space: the reader will understand that also the non-uniform combination, or blending, of individual stylisations occurs with respect to the relevant feature vectors. In other words, different proportions of different stylised content feature vectors (at different $j$-values) may be aggregated.

In accordance with an aspect of the invention, it is proposed to provide a method and arrangement to tune feature vectors, including the individual stylised content feature vectors arising at different $i$-values and $j$-values, and to thereby to combine, or blend, the individual stylised content feature vectors, in a user-determined mix, for the optimisation of the quality of resulting stylised content images. Such blends or mixes may be highly skewed, in the sense that some of the individual component vectors are heavily attenuated, or even eliminated, while others are increased or magnified.

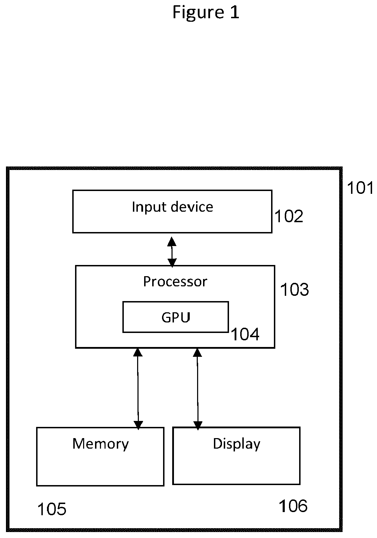

Fig.1 shows a schematic representation of an apparatus according to an aspect of the disclosure herein: a computing device (101) comprising an input means (102), a processor (103) with a graphic processing unit (104), a memory (105) and an output unit eg display (106). The reader will understand the memory must be sufficiently large to store large image datasets, communicate these to the processor which is itself configured to modify such datasets. The processor (103) and graphic processing unit (104) are configured to obtain datasets and perform the processes as set out herein.

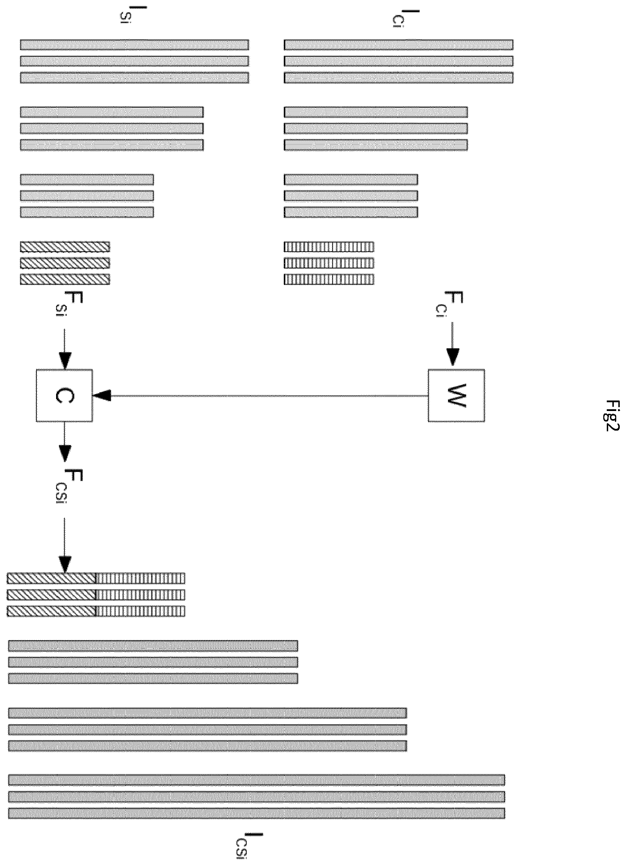

Fig. 2 illustrates a standard style transfer as provided by a conventional system. On the left of the diagram a content dataset (content image $I_{Ci}$) is down-sampled by an encoder and converted into a compact content feature vector $F_{Ci}$ which nevertheless retains the bulk of the attributes of the original content dataset. The encoder also down-samples a style dataset (style image $I_{Si}$), to provide a content feature vector $F_{Si}$, which comprises the bulk of the attributes of the style dataset. A first transformation, whitening W, is performed on the content feature vector $F_{Ci}$, which "whitens" the content feature vector $F_{Ci}$. "Whitening" (W) is required as a pre-stylisation step, and effectively strips the content feature vector $F_{Ci}$ of any colour information it comprises, while preserving all other content data: the whitened content feature vector $F_{Ci}$ is, in this sense, colour-free. Full details of the whitening transformation are not provided here, but it is sufficient to say that, once whitened, the content feature vector $F_{Ci}$ has been prepared for interaction with the style feature vector $F_{Si}$. The content feature vector $F_{Ci}$ may then be subjected to a further transformation, colouring (C), by which some of the attributes of a style dataset (style image $I_{Si}$), present in the style feature vector $F_{Si}$, are adopted by the content feature vector $F_{Ci}$, ie effecting a style transfer to vector $F_{Ci}$, thereby providing a stylised content feature vector $F_{CSi}$. On the right of Fig. 2 the decoder then up-samples the stylised content feature vector $F_{CSi}$ to generated the stylised content image $I_{CSi}$.

The preceding passage is an explanation of a conventional style transfer using a single content image and a single style image. As stated previously, because the encoder-decoder (autoencoder) is imperfect, a single pass through the autoecoder (ie down-sampling, then transformation and finally up-sampling), is liable to generate errors (artefacts). Such artefacts appear as blurriness, vagueness of some objects, distortions, or undesirable patterns, which together reduce the quality of the output stylised content image.

As explained earlier, the overall style transfer is an aggregate of several constituent style transfers arising for each style image and each entity class $i$. The reader will appreciate the relevance of the parameters $i$ and $j$ in such style transfers, distinguished from the rudimentary conventional type explained previously in respect of Fig.2 (in which there is a single style image for each content image, and the stylisation is based only on this style image). These parameters $i$ and $j$ are relevant to the general tuning model, as set out below, which facilitates enhancements or attenuations in relation to different components of the aggregate (composite) style transfer described above.

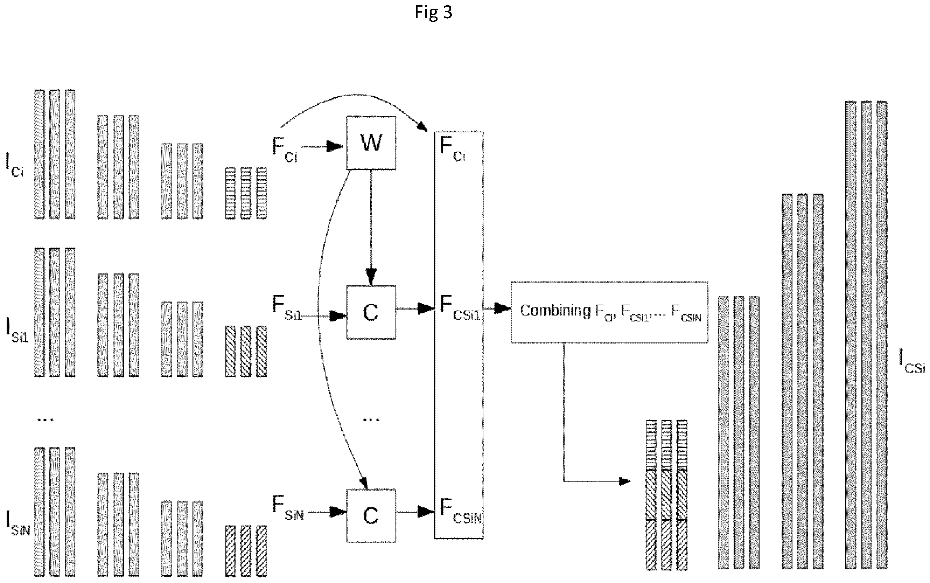

In accordance with an aspect of the process and arrangement of the invention, Fig. 3 illustrates a "tunable" style transfer, in which specific components (of an aggregate style transfer) related to different $i$- and $j$-values may be individually adjusted, according to the needs of the operator. This is a variable tuning model, which allows the operator to reduce or suppress or eliminate, or to increase or emphasise, the individual contributions of specified components of the aggregate (composite) style transfer discussed above. As stated previously, by reducing the contribution of certain specified components, especially those giving rise to a relatively high numbers of artefacts, the quality of the final stylised image, resulting from the aggregate style transfer, may be enhanced. The reader will appreciate that, as in Fig.2, the process illustrated at Fig.3 represents, on the left, down-sampling of input images (content image $I_C$ and style image $I_S$), to the corresponding feature vectors $F_C$ and $F_S$, followed by some transformations W and C on the feature vectors, including the style transfer to stylise the content feature vector $F_C$, and finally an up-sampling (to reverse the down-sampling) which operates on the stylised content feature vectors $F_{CS}$ and outputs a stylised content image $I_{CS}$.

In contrast to Fig.2, with just a single content image and style image , Fig 3 illustrates also the possibility (not known in conventional systems) of a plurality $j$ of style images $I_{Sij}$, where $j$ = 1 to N, for each class $i$ of the content image $I_{Ci}$, where $i$ = 1 to M, wherein, for each $j$-value, an individual style transfer is performed, by the selected style feature vector $F_{Sij}$, on the relevant (whitened) content feature vector $F_{Ci}$. This leads to the generation of a series of "components", or stylised content feature vector $F_{CSij}$, one produced for each of the j stylisations, occurring at each "C" transform. A difference with the conventional arrangement in Fig.2 is, therefore, that Fig. 3 reflects a more complex scenario, comprising also the different $i$- and $j$-values, each giving rise to a different component of the aggregate style transfer, as discussed above.

According to a further aspect of the invention, these components may be mixed at will by the operator: unlike conventional systems, the arrangement illustrated at Fig.3 provides a non-uniform treatment of the different components arising from each individual style transfer (as shown by the different colouring transforms "C"). Unlike the conventional scenario in Fig.2, in the scenario in Fig.3 there are j style feature vectors $F_{Sij}$ for each content feature vector $F_{Ci}$, such that, for each $i$-value, there is one selected style feature vector $F_{Sij}$ and $j$ stylised content feature vectors $F_{CSij}$, where $j$ =1 to N. The aggregation of the different stylised content feature vectors $F_{CSij}$ is then up-sampled, as in conventional arrangements, to produce the stylised content image $I_{CSi}$ for that $i$-value.

In accordance with an exemplary embodiment of the process and method of the invention Fig. 3 illustrates a combination of different stylisation components (stylised content feature vectors $F_{CSij}$) The invention comprises any combination or aggregation of the individual component transformations arising at any i- and j-value, by which the attributes or data of a content image, or its corresponding feature vector, is transformed to acquire some or all of the attributes (a subset thereof) of the feature vector(s) of at least one style image. The acquisition of attributes from different style feature vectors, and the corresponding degree of stylisation, is not equal across all components, ie across all style feature vectors, with variable proportions of the individual components transformations present in the aggregation/combination. In some aggregations/combinations particular components may be accentuated, while other components are attenuated or eliminated. The particular mix of components is determined by the operator according to his/her needs.

In accordance with an aspect of the process and arrangement of the invention, the aggregate style transfer may be a weighted average of the individual style transfers as operated on the content feature vector $F_{Ci}$. In practice, the weighting occurs in feature vector space: the weighted average is the weighted average of the stylised content feature vectors, the weights being formed by the blending factor $\alpha_{ij}$ operable on each stylised content feature vector $F_{CSij}$, including an initialised value $F_{Ci}$ , of $F_{CSij}$ at the different $i$- and $j$-values. The weights (or blending factors $\alpha_{ij}$) effectively determine the proportions of the relevant stylised content feature vectors $F_{CSij}$, present in the weighted average.

In accordance with an exemplary process and arrangement of the invention, the combination/aggregation, illustrated in Figure 3, may comprise a parameter $\alpha$ applicable to the individual stylisation components. To be more precise, the parameter $\alpha_{ij}$, being a function of both $i$ and $j$, which determines the individual components (or constituent parts) of the aggregate style transfer, allows each component to be reduced or increased, as determined by the operator. The parameter $\alpha_{ij}$ facilitates a more flexible and user-determined tuning model for style transfer. This parameter $\alpha_{ij}$ is referred to as the blending factor, and may be used to modify the component of the style transfer (in practice, it is applied to the corresponding stylised content feature vector $F_{CSij}$- see below), as arising for the different $i$- and $j$-values. The different style transfer components, each comprising the individual stylised content feature vector $F_{CSij}$, as modified by its respective blending factor $\alpha_{ij}$, which determines which proportion of the vector $F_{CSij}$ is passed, are combined (or summed) in an overall aggregate style transfer, thereby deriving a blended feature vector $F_i^*$. The blending factors ($\alpha_{ij}$: $\alpha_{i0}$, $\alpha_{i1}$, $\alpha_{i2}$, ..., $\alpha_{iN}$) may be determined independently of each other. Any change in any of the blending factors ($\alpha_{ij}$: $\alpha_{i0}$, $\alpha_{i1}$, $\alpha_{i2}$, ..., $\alpha_{iN}$) directly changes the mix or blend of the stylised content feature vectors $F_{CSij}$, thereby giving a different blended feature vector $F_i^*$: by increasing some values of the blending factors ($\alpha_{ij}$: $\alpha_{i0}$, $\alpha_{i1}$, $\alpha_{i2}$, ..., $\alpha_{iN}$) the corresponding component style transfers will be enhanced, by decreasing some values of the blending factors the corresponding component style transfers will be decreased. The reader will understand that by selective determination of the values of each blending factor ($\alpha_{ij}$: $\alpha_{i0}$, $\alpha_{i1}$, $\alpha_{i2}$, ..., $\alpha_{iN}$) the blended feature vector $F_i^*$ can be made "more stylised" or "less stylised", and it possible to "tune" the blended feature vector $F_i^*$ between the two extreme situations of minimum or no stylisation and maximum stylisation.

In accordance with an aspect of the process and arrangement of this disclosure, the combination/aggregation, or weighted average, of the stylised content feature vectors $F_{CSij}$ may be represented by the relation

$$F_i^* = \alpha_{i0}F_{Ci} + \sum_{j=1}^{N} \alpha_{ij}F_{CSij} \; [1]$$

As stated in relation to Fig. 3 above, other combinations of stylised content feature vectors may also be envisaged.

The different weightings (the blending factors $\alpha_{ij}$) may be applied to the respective stylised content feature vectors $F_{CSij}$, which may each be regarded as providing a different component of the aggregate (composite) style transfer. As stated above, the different components of the aggregate style transfer, ie the different stylised content feature vectors $F_{CSij}$, are unequal and make non-uniform contributions to the aggregate, each with a different performance in terms of error propagation. The operator is free to choose the blending factors $\alpha_{ij}$ and the proportionate contributions of the different stylised content feature vectors $F_{CSij}$. The reader will readily understand, from the foregoing, that by varying the different factors $\alpha_{ij}$ some components of the stylisation will be enhanced, while others may be reduced. Moreover, by enhancing those components which have relatively fewer artefacts, and, at the same time, by attenuating those components which have fewer artefacts, then the overall performance, at least in terms of errors and artefacts, of the aggregated signal, ie the composite stylised content feature, such as $F_i^*$ can be selectively improved. Each *different* set of blending factors $\alpha_{ij}$ will have a *different* overall effect on the quality of the composite (aggregate) stylised content feature vector $F_i^*$, and therefore on the blended stylised content image $I_{CSi}$, which is the up-sampled version of the composite stylised content feature vector $F_i^*$. The reader will understand, that by selective determination of the set of blending factors $\alpha_{ij}$, the operator determining the set has considerable freedom to enhance the quality of blended stylised content images $I_{CSi}$: a user-determined weighted average of the components of the stylised content feature vector and, in particular, the blending factors $\alpha_{ij}$, facilitates a significant improvement in stylised image quality.

The steps described above facilitate optimisation of the overall style transfer to a content image, by selecting different mixes of attributes from different style image (from their feature vectors) to be applied to (acquired by) the content image (by its feature vector). The reader will understand that these process steps (illustrated Fig.3) may be performed by the processor (103) and its GPU (104), with content/style images being called up from the memory (105) or input using means (102), and output images may be rendered using output means (106), as set out in Fig.1. The reader will understand that the input means (102) can be a camera suitable for capturing real images, which may themselves be used as style images.

In an exemplary aspect of the process and arrangement herein disclosed, the combination of the different style transfer components, each comprising the individual stylised content feature vector $F_{CSij}$, as modified by its respective blending factor $\alpha_{ij}$, in an overall aggregate style transfer, to derive a blended feature vector $F_i^*$, may, in the scenario that $j=N=1$, be represented by the relation

$$F_i^* = (1 - \alpha_{i1})\, F_{Ci} + \alpha_{i1} F_{CSi1} \quad [2]$$

In this scenario, for any $i$-value, there is only one value of $\alpha_{ij}$ which is the variable blending factor $\alpha_{i1}$. This combination formula [2], containing just two components, $(1 - \alpha_{i1})\, F_{Ci}$ and $\alpha_{i1} F_{CSi1}$, is in fact a special case of the combination formula [1] in the preceding passage, by using in [1] the constraint that

$$\alpha_{i0} + \alpha_{i1} = 1$$

In other words, the constraint stipulates that

$$\alpha_{i0} = 1 - \alpha_{i1}.$$

The reader will appreciate that this stipulation, in the formula [1], leads to the specific relation at formula [2]. Superficial inspection of this second formula [2] shows that this effectively represents a tuning model for varying the stylisation applied: at $\alpha_{i1} = 1$ the first component drops out altogether and $F_i^* = F_{CSi1}$, corresponding to a blended feature vector with maximised stylisation; while at the opposite extreme, with $\alpha_{i1} = 0$, the second component drops out altogether and $F_i^* = F_{Ci}$, ie the blended feature vector is the same as the original content feature vector $F_{Ci}$, such that the blended stylised content image $I_{CSi}$ is the same as the input content $I_{Ci}$, with no stylisation at all.

In relation to combination formula [2] (although the same holds true for combination formula [1]) the reader will immediately appreciate that this relation provides an adjustable mechanism for varying the stylisation moving between $\alpha_{i1} = 0$ and $\alpha_{i1} = 1$ and comprising all intermediate values. This adjustable mechanism is effectively a stylisation tuning device.

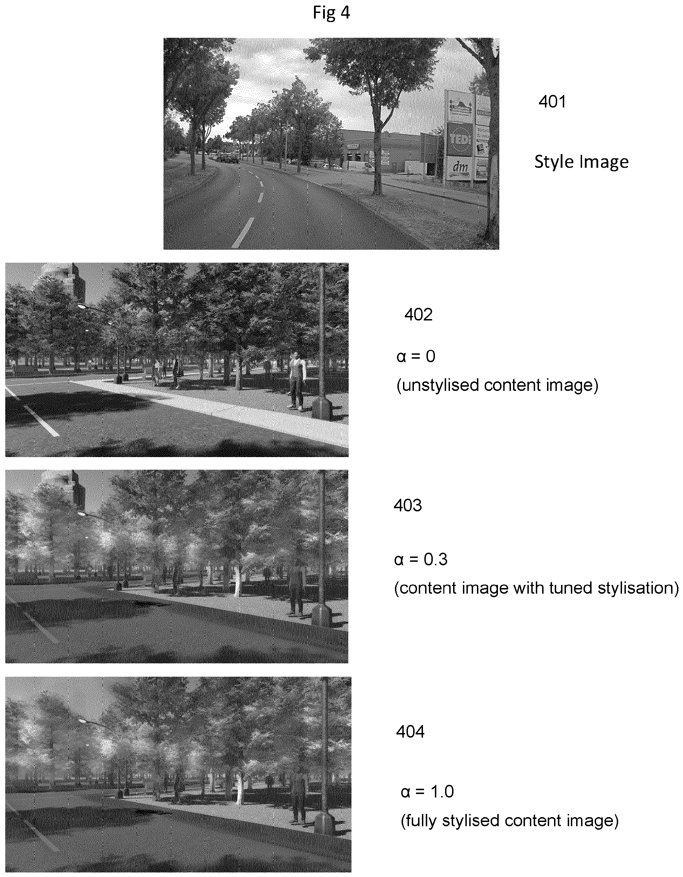

In accordance with an aspect of the process and arrangement of the invention, Fig 4 shows a number of stylised content images in which different combinations of blending factors $\alpha_{ij}$ have been applied. For simplicity of explanation, the exemplary analysis depicted in Fig.4 assumes a single fixed value of the blending factor across all values of "i", and the blending factor $\alpha_{i1}$ is referred to in the diagram simply as "$\alpha$", which varies between the values 0 and 1. Just one style image is shown at (401) to avoid complicating the illustration, but the reader will understand that several style images may be involved, as explained previously. In order to explain the impact of the different values of the blending factor $\alpha$ Fig.4 specifically considers, as an example, a scenario in which $\alpha$ varies between the values of 0 and 1 and the aggregate style transfer varies accordingly. At an $\alpha$-value of 0 the effect of the blending is to leave the content feature vector $F_{Ci}$ <u>un</u>stylised ie the blended feature vector $F_i^*$ is the same as the input content feature vector $F_{Ci}$, and the blended stylised content image $I_{CSi}$ is the same as the input content image $I_C$, as shown at (402). The blended stylised content image $I_{CSi}$ at (402) is sharp and clear, but contains no information obtained from the style image (401) and is effectively unstylised.

At the other extreme, where $\alpha$ is set to 1.0, the content feature vector $F_{Ci}$ being "fully stylised" by a combination of different style feature vectors ($F_{Sij}$: $F_{Si1}$, $F_{Si2}$, ..., $F_{SiN}$), each derived from its respective style images $I_{Sij}$ and the resulting blended feature vector $F_i^*$ (and, after upsampling, the resulting blended stylised content image $I_{CSi}$) represents the maximum stylisation, at (404). The blended stylised content image $I_{CSi}$ shown at (404) contains the maximum style image data, but at the cost of a greater proliferation of artefacts. Some parts of the image are blurry and some entities therein, such as the building in the background, have become invisible, as the relevant annotations no longer match in the image (those pixels labelled as "building" are not referring to any building in the stylised image).

In between these two extremes, there are other combinations of style feature vectors ($F_{Sij}$: $F_{Si1}$, $F_{Si2}$, ..., $F_{SiN}$), which result in other blended feature content vectors $F_i^*$ and other blended stylised content image $I_{CSi}$, with intermediate stylisations between the minimum and maximum. An example of such an intermediate stylisation is shown at (403), for which $\alpha = 0.3$. This intermediate stylisation is essentially a compromise between the two extremes: as can be readily seen at (403) this value of $\alpha_{i1}$ looks reasonably sharp with most entities being clear. The building is clearly visible in (403). Fig.4 is only in black and white, but the colour version (not provided herewith) gives a good rendition of the colours and is similar to those of the style image (401).

An analysis of the quality of stylised content images $I_{CSi}$ reveals that the highest photorealism in the images does not necessarily occur at the two extremes described in relation to Fig. 4, and the best stylised content image $I_{CSi}$ (ie best in terms of realism) may be the result of an intermediate combination.

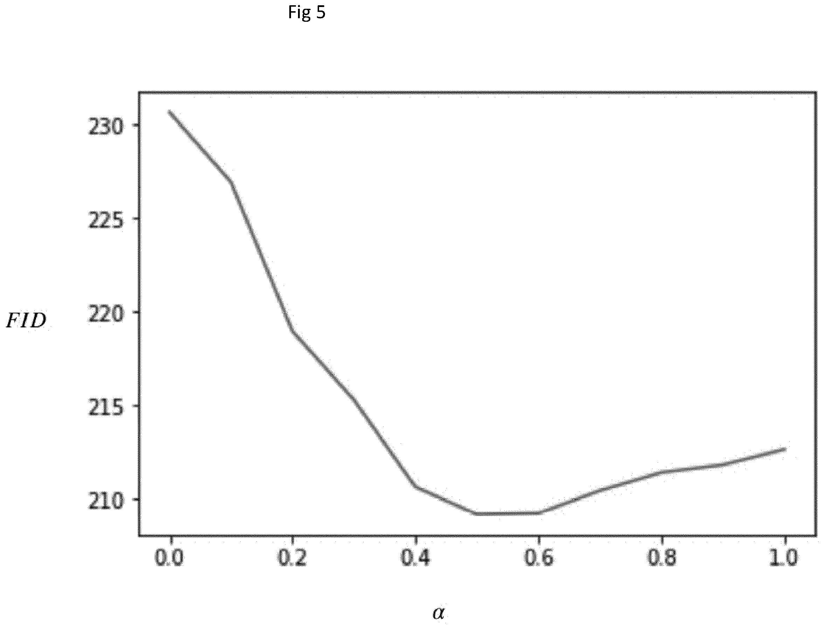

In accordance with an aspect of the process and arrangement of the invention, Fig 5 illustrates how the quality of the stylised content image varies with the blending factor $\alpha_{ij}$. For simplicity of explanation, the exemplary analysis depicted in Fig.5 assumes a single fixed $i$- and $j$-value, and the blending factor $\alpha_{i1}$ is referred to in the diagram simply as "$\alpha$", which varies between the values 0 and 1. The vertical axis depicts the value of a general quality parameter (which one can refer to as Q), which, in this exemplary analysis is the Fréchet Inception Distance (FID), but other image quality parameters, such as Intersection over Union (IOU), could just as easily have been used.

The FID score is a measure of the statistical distance between two datasets: if the datasets are identical it returns 0 and the larger the value of the FID score, the more distinct are two datasets from each other. In other words, smaller FID scores indicate a high likeness or correspondence between the two datasets in question. As a quality parameter Q, the FID score is an inverse measure of quality, ie the lowest FID score representing the highest quality. Figure 5 illustrates the FID score between a style image dataset and a content dataset, the latter having been stylised by images from the style image dataset using different values of $\alpha$ between 0 and 1: it uses the tuning mechanism described above to obtain different style transfers (aggregates of the component style transfers) and different image qualities.

Interestingly, the FID score takes a minimum at $\alpha=0.5$, which is therefore a point of maximum quality, and has an asymmetric distribution around this value. This analysis demonstrates the utility of a style transfer tuning model, which allows the user to identify a tuning input which maximises the quality and realism of stylised content images and thereby tune the style transfer to the optimal level.

Although this disclosure makes reference to several examples of the aspects and embodiments, it will be readily understood that embodiments of the invention are not restricted to those which are explicitly referenced herein: all aspects and embodiments may be modified to comprise any number of amendments, alterations, variations or substitutions, including those which may not be explicitly referenced herein. Accordingly, the embodiments of the invention are not to be understood as limited by the written description set out herein and are to be limited only by the scope of the appended claims. Although some features of some embodiments appear in some examples, embodiments or drawings and not in others, this is only for brevity and intelligibility: components, features and structures of the aspects and embodiments disclosed herein may be readily combined as appropriate. Even if such combinations are not illustrated or explicitly referenced herein in relation to a particular aspect of an embodiment this is merely for brevity of the description and should not be interpreted as meaning that such combinations are excluded or impossible: the different features and of the various aspects and embodiments may be mixed and combined as appropriate and this disclosure should be construed as covering all combinations and permutations of features referenced herein.

**Claims**

1. A process for applying style images $I_{Sij}$ to at least one content image $I_{Ci}$ containing entity classes $i$ (i: 1, 2, ...M), wherein attributes of a plurality $j$ of style images ($I_{Sij}$: $I_{Si1}$, $I_{Si2}$, ...$I_{SiN}$), each containing entity classes $i$ (i: 1, 2, ...M), are transferred to the content image $I_{Ci}$, the process comprising the steps, for each entity classes $i$ (i: 1, 2, ...M), of:

    - down-sampling the at least one content image $I_{Ci}$, to derive a content feature vector $F_{Ci}$
    - down-sampling the $j$ style images $I_{Sij}$, to derive $j$ style feature vectors ($F_{Sij}$: $F_{Si1}$, $F_{Si2}$, ..., $F_{SiN}$)
    - stylising the content feature vector $F_{Ci}$ by transferring attributes of the style feature vectors ($F_{Sij}$: $F_{Si1}$, $F_{Si2}$, ..., $F_{SiN}$) to the content feature vector $F_{Ci}$, to derive $j$ stylised content feature vectors ($F_{CSij}$: $F_{CSi1}$, $F_{CSi2}$, ..., $F_{CSiN}$)
    - inputting a plurality of variable blending factors ($\alpha_{ij}$: $\alpha_{i0}$, $\alpha_{i1}$, $\alpha_{i2}$, ..., $\alpha_{iN}$)
    - combining a factor $\alpha_{i0}$ of the content feature vector $F_{Ci}$ with a factor ($\alpha_{ij}$: $\alpha_{i1}$, $\alpha_{i2}$, ..., $\alpha_{iN}$) of each of the respective stylised content feature vectors ($F_{CSij}$: $F_{CSi1}$, $F_{CSi2}$, ..., $F_{CSiN}$) to derive a blended feature vector $F_i^*$
    - up-sampling the blended feature vector $F_i^*$ to generate a blended stylised content image $I_{CSi}$

2. A process as Claim 1, wherein the stylising step comprises transforming the content feature vector $F_{Ci}$, wherein the content feature vector $F_{Ci}$ acquires a subset of the attributes of the style feature vector $(F_{Sij}: F_{Si1}, F_{Si2}, ..., F_{SiN})$

3. A process as in any preceding claim, wherein, the combining step comprises generating a weighted average of the content feature vector $F_{Ci}$ and stylised content feature vectors $F_{CSij}$ using blending factors $(\alpha_{ij}: \alpha_{i0}, \alpha_{i1}, \alpha_{i2}, ..., \alpha_{iN})$ as the weighting factors.

4. A process as in any preceding claim, wherein, the combining step comprises combining a blending factor $\alpha_{i0}$ of the content feature vector $F_{Ci}$ with the sum of the blending factors $\alpha_{ij}$ of the stylised content feature vector $F_{CSij}$, according to the relation

$$F_i^* = \alpha_{i0} F_{Ci} + \sum_{j=1}^{N} \alpha_{ij} F_{CSij}$$

5. A process as in any preceding claim, wherein the stylising step comprises at least the transformation of colouring

6. A process as in Claim 5, wherein the attributes of the style feature vectors $(F_{Sij}: F_{Si1}, F_{Si2}, ..., F_{SiN})$ are the statistical properties of the style feature vectors $(F_{Sij}: F_{Si1}, F_{Si2}, ..., F_{SiN})$

7. A process as in Claim 6, wherein the attributes of the style feature vectors $(F_{Sij}: F_{Si1}, F_{Si2}, ..., F_{SiN})$ are the mean and covariance of the style feature vectors $(F_{Sij}: F_{Si1}, F_{Si2}, ..., F_{SiN})$

8. A process as in any preceding claim, further comprising a computation step, comprising computing a quality parameter Q of the blended content image $I_{CSi}$ for a range of values of the blending factor $(\alpha_{ij}: \alpha_{i0}, \alpha_{i1}, \alpha_{i2}, ..., \alpha_{iN})$.

9. A process as in Claim 8, further comprising an optimisation step, comprising selecting the value of the blending factor $(\alpha_{ij}: \alpha_{i0}, \alpha_{i1}, \alpha_{i2}, ..., \alpha_{iN})$ which corresponds to the highest value of the quality parameter Q.

10. A process as in any one of Claims 8 or 9, wherein the quality parameter Q is the inverse of the Fréchet Inception Distance (FID).

11. A process as in any one of Claims 8 or 9, wherein the quality parameter Q is the parameter Intersection over Union (IOU).

12. A process as in any preceding claim, wherein the sum of the blending factors $(\alpha_{ij}: \alpha_{i0}, \alpha_{i1}, \alpha_{i2}, ..., \alpha_{iN})$ is equal to one.

13. A process as in Claim 12, wherein $j=1$, and wherein the step of inputting a plurality of blending factors $(\alpha_{ij}: \alpha_{i0}, \alpha_{i1}, \alpha_{i2}, ..., \alpha_{iN})$ comprises inputting a single blending factor $\alpha_{i1}$ and the combining step comprises combining a proportion $\alpha_{i0} = (1 - \alpha_{i1})$ of the content feature vector $F_{Ci}$ with a proportion of the stylised content feature vector $F_{CSi1}$ according to the relation

$$F_i^* = (1 - \alpha_{i1}) F_{Ci} + \alpha_{i1} F_{CSi1}$$

14. A process implemented by a computer comprising the steps of any of Claims 1 to 13.

15. A computing system comprising input device, memory, graphic processing unit (GPU), and an output device, configured to execute the process steps according to any one of the Claims 1 to 13.

16. A computer program product comprising program code instructions stored on a computer readable medium to execute the process steps according to any one of the Claims 1 to 13 when said program is executed on a computing system.

17. A computer-readable storage medium comprising instructions, which, when executed by a computer, causes the computer to implement the steps according to any of the Claims 1 to 13.

**Amended claims in accordance with Rule 137(2) EPC.**

1. A process for applying style images $I_{Sij}$ to at least one content image $I_{Ci}$ containing entity classes $i$ (i: 1, 2, ...M), wherein attributes of a plurality j of style images $(I_{Sij}: I_{Si1}, I_{Si2}, ......I_{SiN})$, each containing entity classes $i$ (i: 1, 2, ...M), are transferred to the content image $I_{Ci}$, the process comprising the steps, for each entity classes $i$ (i: 1, 2, ...M), of:

    - down-sampling the at least one content image $I_{Ci}$, to derive a content feature vector $F_{Ci}$
    - down-sampling the j style images $I_{Sij}$, to derive j style feature vectors $(F_{Sij}: F_{Si1}, F_{Si2}, ..., F_{SiN})$
    - stylising the content feature vector $F_{Ci}$ by transferring attributes of the style feature vectors $(F_{Sij}: F_{Si1}, F_{Si2}, ..., F_{SiN})$ to the content feature vector $F_{Ci}$, to derive j stylised content feature vectors $(F_{CSij}: F_{CSi1}, F_{CSi2}, ..., F_{CSiN})$
    - inputting a plurality of variable blending factors $(\alpha_{ij}: \alpha_{i0}, \alpha_{i1}, \alpha_{i2}, ..., \alpha_{iN})$
    - combining a factor $\alpha_{i0}$ of the content feature vector $F_{Ci}$ with a factor $(\alpha_{ij}: \alpha_{i1}, \alpha_{i2}, ..., \alpha_{iN})$ of each of the respective stylised content feature vectors $(F_{CSij}: F_{CSi1}, F_{CSi2}, ..., F_{CSiN})$ to derive a blended feature vector $F_i^*$

- up-sampling the blended feature vector $F_i^*$ to generate a blended stylised content image $I_{CSi}$;
- wherein the stylising step comprises transforming the content feature vector $F_{Ci}$, wherein the content feature vector $F_{Ci}$ acquires a subset of the attributes of the style feature vector ($F_{Sij}$ : $F_{Si1}$, $F_{Si2}$, ..., $F_{SiN}$).

2. A process as in any preceding claim, wherein, the combining step comprises generating a weighted average of the content feature vector $F_{Ci}$ and stylised content feature vectors $F_{CSij}$ using blending factors ($\alpha_{ij}$: $\alpha_{i0}$, $\alpha_{i1}$, $\alpha_{i2}$, ..., $\alpha_{iN}$) as the weighting factors.

3. A process as in any preceding claim, wherein, the combining step comprises combining a blending factor $\alpha_{i0}$ of the content feature vector $F_{Ci}$ with the sum of the blending factors $\alpha_{ij}$ of the stylised content feature vector $F_{CSij}$ , according to the relation

$$F_i^* = \alpha_{i0} F_{Ci} + \sum_{j=1}^{N} \alpha_{ij} F_{CSij}$$

4. A process as in any preceding claim, wherein the stylising step comprises at least the transformation of colouring

5. A process as in Claim 5, wherein the attributes of the style feature vectors ($F_{Sij}$ : $F_{Si1}$, $F_{Si2}$, ..., $F_{SiN}$) are the statistical properties of the style feature vectors ($F_{Sij}$ : $F_{Si1}$, $F_{Si2}$, ..., $F_{SiN}$)

6. A process as in Claim 6, wherein the attributes of the style feature vectors ($F_{Sij}$ : $F_{Si1}$, $F_{Si2}$, ..., $F_{SiN}$) are the mean and covariance of the style feature vectors ($F_{Sij}$ : $F_{Si1}$, $F_{Si2}$, ..., $F_{SiN}$)

7. A process as in any preceding claim, further comprising a computation step, comprising computing a quality parameter Q of the blended content image $I_{CSi}$ for a range of values of the blending factor ($\alpha_{ij}$: $\alpha_{i0}$, $\alpha_{i1}$, $\alpha_{i2}$, ..., $\alpha_{iN}$).

8. A process as in Claim 8, further comprising an optimisation step, comprising selecting the value of the blending factor ($\alpha_{ij}$: $\alpha_{i0}$, $\alpha_{i1}$, $\alpha_{i2}$, ..., $\alpha_{iN}$) which corresponds to the highest value of the quality parameter Q.

9. A process as in any one of Claims 8 or 9, wherein the quality parameter Q is the inverse of the Fréchet Inception Distance (FID).

10. A process as in any one of Claims 8 or 9, wherein the quality parameter Q is the parameter Intersection over Union (IOU).

11. A process as in any preceding claim, wherein the sum of the blending factors ($\alpha_{ij}$: $\alpha_{i0}$, $\alpha_{i1}$, $\alpha_{i2}$, ..., $\alpha_{iN}$) is equal to one.

12. A process as in Claim 12, wherein $j=1$, and wherein the step of inputting a plurality of blending factors ($\alpha_{ij}$: $\alpha_{i0}$, $\alpha_{i1}$, $\alpha_{i2}$, ..., $\alpha_{iN}$) comprises inputting a single blending factor $\alpha_{i1}$ and the combining step comprises combining a proportion $\alpha_{i0} = (1- \alpha_{i1})$ of the content feature vector $F_{Ci}$ with a proportion of the stylised content feature vector $F_{CSi1}$ according to the relation

$$F_i^* = (1- \alpha_{i1})\, F_{Ci} + \alpha_{i1} F_{CSi1}$$

13. A process implemented by a computer comprising the steps of any of Claims 1 to 13.

14. A computing system comprising input device, memory, graphic processing unit (GPU), and an output device, configured to execute the process steps according to any one of the Claims 1 to 13.

15. A computer program product comprising program code instructions stored on a computer readable medium to execute the process steps according to any one of the Claims 1 to 13 when said program is executed on a computing system.

16. A computer-readable storage medium comprising instructions, which, when executed by a computer, causes the computer to implement the steps according to any of the Claims 1 to 13.

Figure 1

Fig2

Fig 3

EP 4 080 458 A1

Fig 4

401

Style Image

402

α = 0
(unstylised content image)

403

α = 0.3
(content image with tuned stylisation)

404

α = 1.0
(fully stylised content image)

Fig 5

Europäisches
Patentamt

European
Patent Office

Office européen
des brevets

# EUROPEAN SEARCH REPORT

Application Number

EP 21 16 9171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 496 898 B2 (DIGITAL SURGERY LTD [GB]) 3 December 2019 (2019-12-03) * Fig. 7 and col. 15, l. 11-24,36-42. col. 16, l. 3-9, 44-51. col. 17, l. 16-40, 43-49. from col. 17, l. 52 until col. 18, l. 51. col. 19, l. 11-17. col. 20, l. 15-31. * ----- | 1-17 | INV. G06T11/00 |
| X | PARASKEVAS PEGIOS ET AL: "Style Decomposition for Improved Neural Style Transfer", ARXIV.ORG, CORNELL UNIVERSITY LIBRARY, 201 OLIN LIBRARY CORNELL UNIVERSITY ITHACA, NY 14853, 30 November 2018 (2018-11-30), XP080940708, * Fig. 2, Option 2 and Sec. 3.1. Sec. 3.2 paragraph "Semantic Substyle Transfer (SST)". * ----- | 1,12-17 | |
| X | ZHANG YULUN ET AL: "Multimodal Style Transfer via Graph Cuts", 2019 IEEE/CVF INTERNATIONAL CONFERENCE ON COMPUTER VISION (ICCV), IEEE, 27 October 2019 (2019-10-27), pages 5942-5950, XP033723761, DOI: 10.1109/ICCV.2019.00604 [retrieved on 2020-02-24] * p. 1053, paragraph "SANET Model", Fig. 3 and p. 1054, right column, l. 8-13. * ----- -/-- | 1,12-17 | TECHNICAL FIELDS SEARCHED (IPC) G06T |

The present search report has been drawn up for all claims

| Place of search | Date of completion of the search | Examiner |
|---|---|---|
| Munich | 6 October 2021 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | Application Number<br>EP 21 16 9171 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | PEGIOS PARASKEVAS PPEGIOSK@CSD AUTH GR ET AL: "Improving Universal Style Transfer using Sub-style Decomposition",<br>11TH HELLENIC CONFERENCE ON ARTIFICIAL INTELLIGENCE, ACMPUB27, NEW YORK, NY, USA,<br>2 September 2020 (2020-09-02), pages 97-100, XP058468698,<br>DOI: 10.1145/3411408.3411411<br>ISBN: 978-1-4503-8878-8<br>* Sec. 2. * | 1,12-17 | |
| X | RATHI PRATIBHA ET AL: "Deep Learning Approach for Arbitrary Image Style Fusion and Transformation using SANET model",<br>2020 4TH INTERNATIONAL CONFERENCE ON TRENDS IN ELECTRONICS AND INFORMATICS (ICOEI)(48184), IEEE,<br>15 June 2020 (2020-06-15), pages 1049-1057, XP033794981,<br>DOI: 10.1109/ICOEI48184.2020.9143024<br>[retrieved on 2020-07-16]<br>* Sec. 3.3. * | 1,12-17 | TECHNICAL FIELDS<br>SEARCHED (IPC) |

The present search report has been drawn up for all claims

| Place of search | Date of completion of the search | Examiner |
|---|---|---|
| Munich | 6 October 2021 | Nicolau, Stephane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

**ANNEX TO THE EUROPEAN SEARCH REPORT
ON EUROPEAN PATENT APPLICATION NO.**

EP 21 16 9171

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2021

| Patent document cited in search report | | Publication date | Patent family member(s) | | Publication date |
|---|---|---|---|---|---|
| US 10496898 | B2 | 03-12-2019 | US | 2018357514 A1 | 13-12-2018 |
| | | | US | 2019164012 A1 | 30-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YIJUN LI.** A Closed-form Solution to Photorealistic Image Stylization. University of California, 27 July 2018